# EUROPÄISCHE PATENTSCHRIFT

(11) **EP 2 676 633 B1**
(45) Veröffentlichungstag und Bekanntmachung des Hinweises auf die Patenterteilung: **08.08.2018**
(21) Anmeldenummer: 13002879.8
(22) Anmeldetag: 05.06.2013
(51) Int. Cl.: A61C 13/00, A61C 13/01

(54) **Formkörper aus weichbleibendem Dentalmaterial, insbesondere Zahnfleischmaske, sowie Verfahren zu deren Herstellung mittels Rapid-Prototyping**
Shaped part made of dental material that remains soft, in particular gingival mask, and method for the production thereof by means of rapid prototyping
Forme en matériau dentaire résilient, notamment masque gingival, et procédé de fabrication de celle-ci au moyen d'un prototypage rapide

(30) Priorität: 23.06.2012 DE 102012012346
(43) Veröffentlichungstag der Anmeldung: 25.12.2013
(73) Patentinhaber: Kulzer GmbH, 63450 Hanau (DE)
(72) Erfinder: Ruppert, Klaus, 63477 Maintal (DE); Grundler, Andreas, 41542 Dormagen (DE); Bauer, Christian, 63825 Schöllkrippen (DE)
(74) Vertreter: Bendele, Tanja

(56) Entgegenhaltungen:
- DE-A1- 3 902 817
- DE-A1-102007 002 178
- DE-A1-102007 047 301
- DE-A1-102009 056 752
- US-A1- 2008 108 020
- US-A1- 2009 287 332
- US-B2- 7 699 610

## Beschreibung

Die Erfindung betrifft einen Formkörper in Form einer Zahnfleischmaske aus weichbleibendem Dentalmaterial oder eines Teils davon aus einem Lichtstrahlen gehärteten und optional thermisch nachbehandeltem Polymer. Ferner wird ein Verfahren zur Herstellung des Formkörpers eines weichbleibenden Dentalmaterials oder eines Teils davon mittels Rapid-Prototyping wie z.B. bzw. Stereolithographie oder DLP-Verfahren sowie die Verwendung von Lichtstrahlen härtenden Monomeren oder Prepolymeren umfassend Silikone zur Herstellung von Formkörpern aus weichbleibenden Dentalmaterialien und/oder Teilen davon beansprucht, wie einer Zahnfleischmaske zur Abdeckung mindestens eines Teils von freiliegenden Zahnhälsen bzw. zum Ausgleich von sich verändernden Weichgewebeanteilen im Mund.

Bei den Zahnfleischmasken unterscheidet man zwei verschiedene Typen. Zum einen gibt es Zahnfleischmasken zum Einsatz im Patientenmund als Ersatz für alters- oder krankheitsbedingten Zahnfleischrückgang und zweitens gibt es Zahnfleischmasken als Hilfsmittel für den Zahntechniker, um Präparationsgrenzen auf dem Gipsmodell zu simulieren.

Typ 1: Zahnfleischmasken können bei krankheits- oder altersbedingtem Zahnfleischrückgang zum Einsatz kommen. Hier zeigen sich häufig durch die zunehmende Sichtbarkeit der Zahnhälse unnatürlich lange Zähne, dies kann zu schweren kosmetischen Beeinträchtigungen führen. Handelt es sich um einen krankheitsbedingten Zahnfleischrückgang, so steht die Behandlung der Grunderkrankung im Vordergrund. Ist ein stabiles und entzündungsfreies Zahnfleisch wiederhergestellt, so kann der Rückgang des Zahnfleisches durch eine sogenannte Zahnfleischmaske kaschiert werden. Bei einer Zahnfleischmaske handelt es sich um ein künstliches Zahnfleisch z.B. bestehend aus einem flexiblen Polymer. Die Zahnfleischmaske ist eine herausnehmbare Zahnfleischimitation, die in der Regel vom Patienten selbst eingesetzt und entfernt werden kann.

Bisher wird diese Maske auf einem Gipsmodell durch den Zahntechniker individuell gefertigt und danach vom Zahnarzt im Mund des Patienten angepasst. Bei großen Zahnfleischdefekten, z.B. infolge einer fortgeschrittenen Parodontitis, ist eine herausnehmbare Zahnfleischmaske oft die einzige Lösung, um die ursprüngliche Ästhetik wieder nachzubilden oder wieder herzustellen. Nach Abdrucknahme wird im zahntechnischen Labor aus Kunststoff eine hauchdünne zahnfleischfarbene Maske angefertigt, die den Zähnen ganz präzise anliegt. Der Tragekomfort dieser Zahnfleisch-Maske ist für den Patienten in der Regel sehr gut. Auch werden Ästhetik und Phonetik (Aussprache) entscheidend verbessert. Zur Zahnreinigung kann die Maske einfach herausgenommen und anschließend wieder eingesetzt werden.

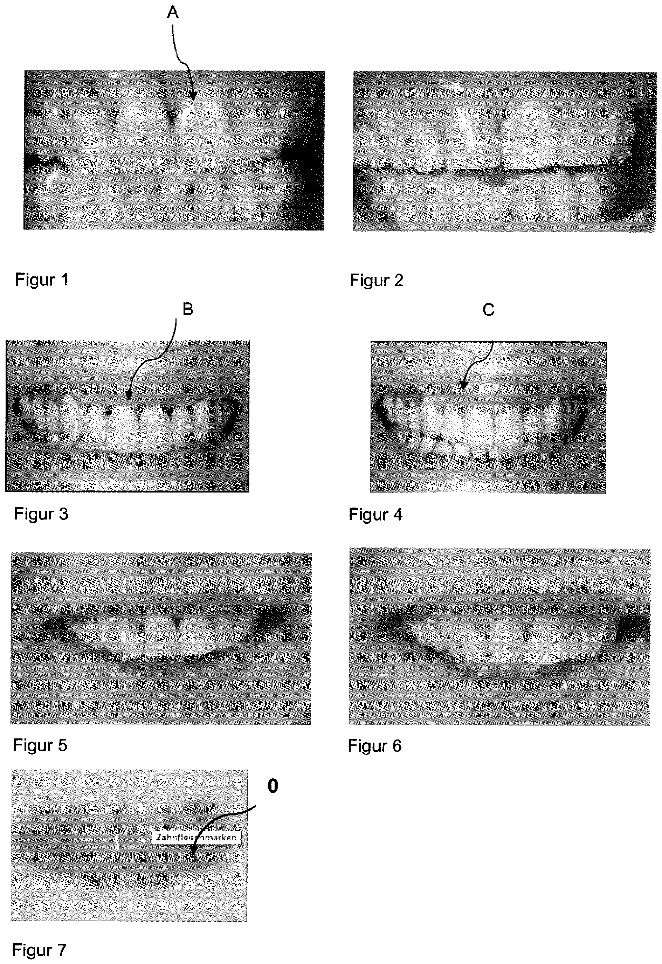

Typ 2: Im Bereich der Zahntechnik wird ein weichbleibendes Material, das auf dem Gipsmodell das Zahnfleisch imitiert, ebenfalls Zahnfleischmaske genannt. Durch ein derartiges Hilfsmittel lassen sich die optischen, räumlichen und ästhetischen Verhältnisse im Mund sehr gut widerspiegeln (Figur 1 und 2). So zeigt die Figur 1 eine Situation mit ausgeprägten Zahnzwischenräumen A, die sich mit einer Zahnfleischmaske, Figur 2 gut kaschieren lassen.

Die DE 8121341 U1 offenbart eine Zahnfleischmaske zur Herstellung und Einpassung des Zahnersatzes an die Zahnfleischpartie und damit ein Hilfsmittel für den Zahntechniker, um die Präparationsgrenze im Modell zu simulieren. Herstellt wird die Zahnfleischmaske durch Einfüllen von fließfähigem, härtbarem Material in die Zwischenräume des Gipsmodells.

ES 2160 504 offenbart ebenfalls eine Zahnfleischmaske sowie auch die US 4204324 A, in der thermisch aushärtbare Elastomere zur Herstellung der Zahnfleischmaske offenbart werden. Nachteil der thermisch härtenden Elastomere ist, dass sie zunächst direkt auf ein Gipsmodell aufgetragen werden müssen, je nach Abmessung der Zahnfleischmaske in einzelnen Schichten, wobei nach dem Auftrag der einzelnen Schichten jeweils thermisch ausgehärtet wird. Diese Art der Herstellung hat den Nachteil, dass sie zu viele Arbeitsschritte benötigt und die Zahnfleischmaske nicht sehr passgenau hergestellt werden kann. Daher weisen die nach dem Stand der Technik hergestellten Zahnfleischmasken den Nachteil auf, dass sie später vom Zahnarzt oftmals weiter angepasst werden müssen.

US2008/108020A1 offenbart eine bei mindestens 100 °C polymerisierte Zahnfleischmaske umfassend Silikone.

Weichbleibende Unterfütterung von Dentalprothesen: Während der Tragezeit einer Dentalprothese ändert sich durch Atrophie der Gaumen- und Kieferkamm, aus diesem Grund muss die Prothese in regelmäßigen Abständen angepaßt bzw. unterfüttert werden.

Aufgabe der Erfindung war es für eine Zahnfleischmaske des Typs 1 ein Verfahren zu entwickeln, dass es erlaubt, ein flexibles, biokompatibles, opakes gefärbtes, opakes farbloses, transparentes und farbloses oder transparent eingefärbtes, insbesondere zahnfleischfarbenes, reißfestes und im Mundmilieu dauerhaft stabiles Material zur Herstellung einer Zahnfleischmaske aus weichbleibendem Material zur oralen Verwendung. Bevorzugt sollte ein Verfahren zur Herstellung einer Zahnfleischmaske im Dentalbereich bereitgestellt werden. Zugleich sollte ein Verfahren und geeignetes Material zur Herstellung dieser Zahnfleischmaske aus weichbleibendem Dentalmaterial mit den vorgenannten Eigenschaften aufgefunden werden. Zudem sollte das Verfahren ökonomischer sein und vorzugsweise die Anzahl der Arbeitsschritte vermindern. Ferner soll die weichbleibende flexible Zahnfleischmaske den Tragekomfort für den Patienten im Vergleich zu bekannten Zahnfleischmasken verbessern. Ebenso sollte eine Zahnfleischmaske entwickelt werden, der mit weniger Arbeitsschritten oder automatisiert hergestellt werden kann und bei dem vorzugsweise auf eine Nachbearbeitung beim Zahnarzt oder Zahntechniker verzichtet werden kann. Folglich sollte ein unmittelbar nach der Herstellung passgenaue erhaltende Zahnfleischmaske aus weichbleibendem Dentalmaterial hergestellt werden.

Gemäß einer weiteren Aufgabe sollte eine Zahnfleischmaske des Typs 2 zur Simulation der ästhetischen oralen Verhältnisse im Labor sowie ein vereinfachtes Verfahren zu deren Herstellung bereitgestellt werden.

Der Gegenstand der Erfindung ist in den Ansprüchen 1, 6 und 14 definiert. Gegenstand der Erfindung ist ein Formkörper in Form einer Zahnfleischmaske aus einem weichbleibenden Dentalmaterial oder eines Teils davon die überraschenderweise aus Lichtstrahlen härtenden Zusammensetzungen von Monomeren und/oder Prepolymeren umfassend Silikone hergestellt werden können. Dabei war es besonders überraschend, dass es gelungen ist einen flexiblen bzw. dauerhaft weichbleibende flexible Zahnfleischmaske mittels Rapid-Prototyping, mittels eines Licht induzierten, generativen Verfahrens z.B. mittels Stereolithographie oder DLP-Verfahrens herstellen zu können. Der weichbleibende Formkörper erfüllt die vorgenannten Anforderungen. Besonders vorteilhaft ist, dass ein flexibler und reißfester Formkörper aus einem weichbleibenden Dentalmaterial aus Zusammensetzungen enthaltend Monomere und/oder Prepolymere von Silikonen und eventuell Mischungen mit Acrylaten, Methacrylaten oder Urethanen sowie optional Füllstoffe, Verdünner und/oder Pigmente hergestellt werden können. Diese Formkörper können je nach geplanter Anwendung transparent, farblos oder auch transparent eingefärbt, opak eingefärbt hergestellt werden. Ein bevorzugtes weichbleibendes Dentalmaterial umfasst Elastomere. Ein Gegenstand der Erfindung ist somit eine Zahnfleischmaske zur Simulation der ästhetischen oralen Verhältnisse im Labor. Ein weiterer Gegenstand der Erfindung ist eine Zahnfleischmaske zur Wiederherstellung der ästhetischen oralen Verhältnisse im Mund des Patienten.

Eine Voraussetzung, die Zahnfleischmasken für die Simulation der ästhetischen Verhältnisse im Labor erfüllen müssen, ist ihre Kompatibilität mit den bei der Herstellung verwendeten Dentalmaterialien wie z.B. Modell-/Abdruckmaterialien und Stumpflacken. Optional kann auf die Zahnfleischmaske reversibel ein Antihaftmittel zur Anpassung im Labor aufgetragen werden, das nachfolgend entfernt werden kann. Die Voraussetzungen für im Mund getragene Zahnfleischmasken und Unterfütterungen ist ihre Biokompatibilität, anhaltende Flexibilität, Erhaltung der Geometrie, Reißfestigkeit und vorzugsweise Benetzbarkeit.

Ebenso Gegenstand der Erfindung ist eine Zahnfleischmaske aus weichbleibendem Dentalmaterial oder eines Teils davon aus einer Lichtstrahlen gehärteten und optional thermisch und/oder Feuchtigkeit nachbehandelten Zusammensetzung umfassend Strahlen gehärtete Polymere, wobei die Zahnfleischmaske vorzugsweise die gingivale Kontur und/oder labiale Kontur und Textur unmittelbar nach der Härtung der Polymere aufweist. Diese Zahnfleischmasken aus weichbleibendem Dentalmaterial werden unmittelbar mit der gewünschten Zahnfleischtextur erhalten, insbesondere muss die Oberflächenkontur der Zahnfleischmaske beim Zahnarzt nicht mehr angepasst werden. Weiter ist es bevorzugt, wenn auch der äußere Umfang der Zahnfleischmaske oder der Unterfütterung unmittelbar nach der Härtung der Polymere die endgültige Geometrie aufweist. Dies führt insbesondere im Bereich der Zähne zu einer erheblichen Zeitersparnis beim Zahnarzt.

Besonders überraschend ist es, dass es gelungen ist, ein flexibles bzw. weichbleibendes Dentalmaterial mittels Licht härtender Verfahren, insbesondere mittels Licht härtendem Rapid-Prototyping - Verfahren, wie Stereolithographie oder DLP-Verfahren, oder einem 3D-Druckverfahren herzustellen. Die Zahnfleischmaske aus weichbleibendem Dentalmaterialkann durch ein Licht härtendes Rapid-Prototyping Verfahren einer Strahlen härtbaren Zusammensetzung, insbesondere mittels UV-A und/oder UV-B-Strahlen, schichtweise zu einem Elastomer ausgehärtet werden. Besonders bevorzugt werden Zusammensetzungen umfassend Strahlen härtbare Silikone verwendet, die weitere Hilfsstoffe, Füllstoffe, Pigmente oder Verdünner enthalten können. Ebenso können Zusammensetzungen umfassend Silikone und Strahlen härtbare Monomere und/oder Prepolymere aus der Gruppe der (Meth-)acrylate oder Urethane verwendet werden.

Unter Strahlenhärtung der Zusammensetzung wird hierbei die Härtung mittels elektromagnetischer Strahlung im UV- oder sichtbaren Wellenlängenbereich verstanden. Vorzugsweise im Bereich von 200 bis 500 nm. Eine ESH-Bestrahlung (ESH = Elektronenstrahlhärtung) kann ebenfalls erfolgen. Hierbei kann zum einen die Belichtung mit einer Wellenlänge erfolgen oder zum anderen auch die Polymerisation mittels verschiedener Wellenlängen erfolgen, entweder gleichzeitig oder mehrstufig zeitlich aufeinanderfolgend. Bevorzugte Aushärtezeiten sind dabei < 2 min. Die erste Strahlenhärtung legt im Wesentlichen die Geometrie und den Umfang des Formkörpers fest und fixiert sie, d.h. sie legt die Dimension, Kontur und Textur des Formkörpers aus weichbleibendem Dentalmaterial, insbesondere der Zahnfleischmaske oder Unterfütterung fest. Anschließend kann auch thermisch eine Nachhärtung bzw. Nachvergütung erfolgen. Optional kann zusätzlich oder alternativ zur thermischen Nachhärtung eine Vernetzung mittels Feuchtigkeit erfolgen. Gemäß einer weiteren Alternative kann eine weitere Aushärtung oder Nachvergütung auch mittels einer zweiten Härtung über elektromagnetische Strahlung erfolgen.

Die erfindungsgemäßen Formkörper aus weichbleibendem Dentalmaterial auch Dentalmaterialien genannt, wobei die Formkörper Zahnfleischmasken sind, sind biokompatibel und erfüllen daher als gehärtete Zusammensetzung oder als gehärtetes Polymer zur Verwendung im Mund die Anforderungen der ISO 10993 (Biokompatibilität). Vorzugsweise erfüllen die erfindungsgemäß hergestellten Unterfütterungen die Anforderungen aus der ISO 10139-1 (temporäre weichbleibende Unterfütterungen) und -2 (permanente weichbleibende Unterfütterungen). Bevorzugte weichbleibende Dentalmaterialien sind Elastomere. Die weichbleibende Dentalmaterialien umfassen Silikone. Gegenstand der Erfindung ist somit ein Formkörper eines weichbleibenden Silikons mit einem strahlenaktivierbaren Katalysator bzw. dessen Reaktionsprodukte.

Eine erfindungsgemäße Zahnfleischmaske deckt zumindest teilweise das Zahnfleisch und Zahnzwischenräume, insbesondere freiliegende Zahnhälse ab, vorzugsweise deckt sie die bei normaler Mimik sichtbaren Zahnzwischenräume und/oder Zahnhälse zuverlässig ab. Der zweite Formkörper kann aus einem harten Material sein, insbesondere eine Zahn- oder Dentalprothese. Haftung findet die Zahnfleischmaske in der Regel durch den dünnen Speichelfilm und die optimale Passform, besonders bevorzugte Zahnfleischmasken benötigen keine weiteren Hilfsmittel zur Haftung und weisen bereits eine ausreichende Adhäsion bzw. Feuchtigkeitshaftung auf. Ferner sind sie so passgenau, dass sie quasi auf dem Zahnfleisch schwimmend haften. Dabei ist es besonders bevorzugt, wenn die Zahnfleischmaske sowohl die Kontur des ehemaligen und noch vorhandenen Zahnfleisches sowie die Textur von gesundem Zahnfleisch nachbildet.

Weiter ist es besonders bevorzugt, wenn die Zahnfleischmaske und/oder die Unterfütterung reißfest sind. Ebenso bevorzugt lässt sie sich mit Wasser oder Speichel, vorzugsweise nur auf ihrer Oberfläche, gut benetzen. Die Benetzbarkeit der Oberfläche des Formkörpers kann durch Zugabe oder Verwendung von polaren Polymeren, polaren Hilfsstoffen, polaren Füllmitteln oder polaren oberflächenmodifizierten Füllmitteln erreicht werden. Um die Formstabilität und/oder die hygienischen Verhältnisse nicht zu beeinträchtigen, weist der Formkörper aus weichbleibendem Dentalmaterial vorzugsweise keine Poren auf.

Ebenso Gegenstand der Erfindung ist ein Formkörper in Form einer Zahnfleischmaske aus weichbleibendem Dentalmaterial aus einer Zusammensetzung enthaltend Silikone oder einer Mischung umfassend Silikone und Urethane oder (Meth)acrylate, erfindungsgemäß wurde der Formkörper aus weichbleibendem Dentalmaterial erhalten durch Lichtstrahlenhärtung von Zusammensetzungen umfassend Silikone und eventuell Urethan-Prepolymere, Isocyanate oder (Meth)acrylaten. Entsprechend einer alternativen bevorzugten Ausführungsform umfasst die gehärtete Zusammensetzung zusätzlich zu den Polymeren nicht-modifizierte oder Oberflächen modifizierte Füllstoffe, Verdünner, Pigmente und/oder Benetzungsmittel.

Ebenso Gegenstand der Erfindung ist eine Zahnfleischmaske aus einem weichbleibenden Dentalmaterial oder ein Formkörper aus weichbleibendem Dentalmaterial, der Teil eines zweiten Formkörpers ist, welche eine Zahnfleischmaske ist, wobei die gingivale Oberfläche der Zahnfleischmaske der Oberflächenkontur des Zahnfleisches und/oder der freiliegenden Zahnhälse angepasst ist und mit der gingivalen Oberfläche auf dem Zahnfleisch und/oder den freiliegenden Zahnhälsen haftet, wobei die labiale Oberfläche der Zahnfleischmaske die Textur und/oder Kontur von Zahnfleisch nachbildet. Gleichfalls wird eine entsprechende Unterfütterung einer Dentalprothese offenbart. Besonders bevorzugt kann die Zahnfleischmaske, insbesondere wenn der digitale Datensatz von einem Oralscan herrührt, bereits so gefertigt werden, dass der Zahnarzt keine weiteren Anpassungen vornehmen muss oder lediglich den äußeren Umfang der Zahnfleischmaske der Mimik des Trägers anpassen muss, d.h. in Abhängigkeit von der möglichen Mundöffnung. Daher sind die mittels Rapid-Prototyping hergestellten Formkörper aus weichbleibendem Dentalmaterial hinsichtlich ihrer Passgenauigkeit, der hergestellten ebenmäßigeren Schichtdicke und ihres Tragekomforts erheblich besser als die bekannten gegossenen Zahnfleischmasken. Die erfindungsgemäß hergestellten Zahnfleischmasken weisen eine Genauigkeit von plus/minus 0,2 mm, insbesondere plus/minus 0,1 mm auf.

Die Zahnfleischmaske ist vorzugsweise eine an die Zahnfleischoberflächenkontur anliegende Schicht, insbesondere eine dünne Schicht oder ein Film, vorzugsweise mit einer Schichtdicke von 0,01 bis 0,75 cm, besonders bevorzugt von 0,05 bis 0,5 cm, wobei optional die Schichtdicke im marginalen Bereich, insbesondere in den Zahnzwischenräumen und/oder Zahnhalszwischenräumen größer ist als im restlichen Bereich und/oder die Zahnfleischmaske auf der labialen Oberfläche einer Zahnfleischtextur nachempfunden ist, insbesondere einer gesunden.

Gemäß einer weiteren Ausführungsform wird ein Verfahren zur Herstellung eines Formkörpers aus weichbleibendem Dentalmaterial oder eines Teils aus einem weichbleibenden Dentalmaterial eines Formkörpers sowie ein Formkörper aus weichbleibendem Dentalmaterial erhältlich nach diesem Verfahren beansprucht, wobei der Formkörper aus weichbleibendem Dentalmaterial oder eines Teils aus einem weichbleibendem Dentalmaterial aus einem digitalen Datensatz mit der Geometrie des virtuellen Modelles des zu erstellenden Formkörpers aus weichbleibenden Dentalmaterials mittels Licht härtender generativer Verfahren, wie z.B. Stereolithographie oder DLP-Verfahren oder einem 3D-Druckverfahren aus einer Strahlen härtbaren Zusammensetzung von Monomeren und/oder Prepolymeren hergestellt wird. Erfindungsgemäß handelt es sich um ein Verfahren zur Herstellung einer Zahnfleischmaske. Ferner basiert das Licht härtende generative Verfahren auf einer schichtweisen Herstellung des Formkörper aus weichbleibendem Dentalmaterial aus einem digitalen Datensatz mit der Geometrie des virtuellen Modells des zu erstellenden Formkörpers, insbesondere einem digitalen Datensatz in dem die Geometrie des virtuellen Modells in Schichten zerlegt wurde. Dabei wird der Formkörper schichtweise aus einer Strahlen härtbaren Zusammensetzung von Monomeren und/oder Prepolymeren hergestellt.

In dem erfindungsgemäßen Verfahren wird mittels einem Licht härtenden Verfahren, insbesondere einem Licht härtenden generativen Verfahren die lichthärtende Zusammensetzung schichtweise ausgehärtet, insbesondere wird die strahlenhärtende Silikone enthaltende Zusammensetzung, wie vorzugsweise eine Silikonmischung gemäß a) (i), (ii) oder (iii) schichtweise ausgehärtet, vorzugsweise mittels Stereolithographie (Laserverfahren) oder DLP-Verfahren. Bei dem LaserVerfahren, in dem bevorzugt mit Faserlasern, Diodenlasern oder Festkörperlasern gearbeitet wird, wird der Laser mit einer maximalen optischen Leistung von 10 mW - 10 W betrieben. Der Laser kann gepulst oder nicht gepulst werden und projiziert in Kombination mit einem beweglichen Spiegel (Scanner) die in CAM erzeugten Daten auf die Oberfläche der Strahlen härtbaren Zusammensetzung.

Beim DLP-Verfahren wird eine Oberfläche der Strahlen härtbaren Zusammensetzung über einen DLP-Chip (Digital-Light-Processing, ein Mikrospiegelsystem), welcher durch eine LED-Technik, die bei einer optischen Leistung von 0,5 W - 10 W arbeitet, bestrahlt. Das DLP-Verfahren kann statisch sowie im scrollenden Verfahren verwendet werden. Bei beiden Verfahren werden üblicherweise Wellenlängen von 340 nm bis 500 nm verwendet.

Gegenstand der Erfindung ist ein Verfahren, in dem mittels eines Licht härtenden Verfahrens ein Formkörper einer Zahnfleischmaske eines weichbleibenden Dentalmaterials schichtweise aufgebaut bzw. gedruckt wird, insbesondere in einem Licht härtenden generativen Verfahren, bevorzugt eine Variante des Rapid-Prototyping Verfahrens, besonders vorzugsweise ein Stereolithographie Verfahren, ein DLP-Verfahren oder 3D-Druckverfahren.

Der Aufbauprozess des flexiblen Formkörpers der Zahnfleischmaske erfolgt in Schichtstärken von 0,01 bis 1 mm, besonders zwischen 0,01 mm und 0,1 mm, bevorzugt bei Temperaturen zwischen 10 °C und 80 °C.

Der zu bauende dentale Formkörper bzw. das zu bauende Objekt wird in einer Planungs- und Steuerungssoftware in Schichten zerlegt und anschließend schichtweise aufgebaut. Die Standfestigkeit des Werkstücks auf der Bauplattform wird durch eine Stützstruktur oder Stützkonstruktion, auch Support genannt, erreicht.

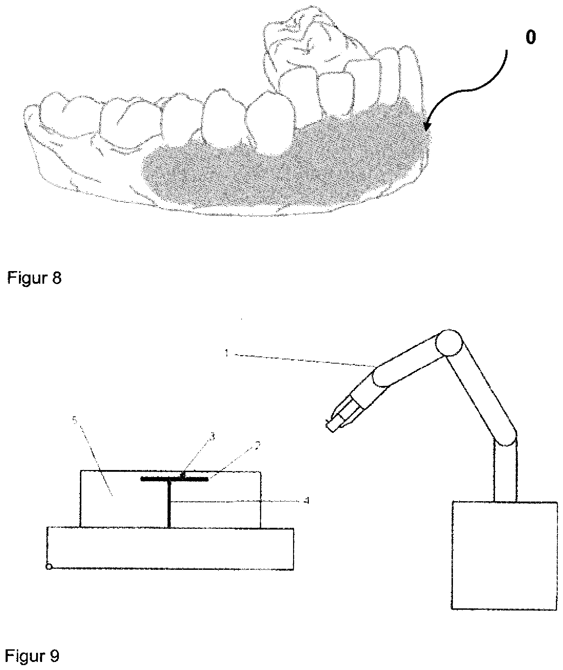

Während des Aufbauprozesses verfährt die Bauplattform (Figur 9, 2) jeweils in Schichtstärke in einem mit der Strahlen härtbaren Zusammensetzung (Figur 9, 5) gefüllten Bad, welches mit dem lichtempfindlichen Material, vorliegend entsprechend dem Ausführungsbeispiel, eine Silikone enthaltende Zusammensetzung, gefüllt ist. Nach dem Härten jeder einzelnen Schicht wird die Bauplattform um einige Millimeter in die Flüssigkeit weiter abgesenkt (Figur 9, 4) und auf eine Position zurückgefahren, die um den Betrag einer Schichtstärke unter der vorherigen liegt. Die Oberfläche der Strahlen härtbaren Zusammensetzung, insbesondere der Silikone enthaltenden Zusammensetzung, über dem Formkörper bzw. Bauteil wird dann durch einen Wischer gleichmäßig verteilt. Im Anschluss erzeugt eines der oben genannten HärteVerfahren, gesteuert durch einen Computer, erneut eine definierte Schicht auf der Oberfläche. Nach deren Aushärten erfolgt der nächste Schritt, so dass nach und nach ein dreidimensionales Modell des Formkörpers aus weichbleibendem Dentalmaterial entsteht, wobei der Formkörper eine Zahnfleischmaske ist. Die Strahlenhärtung wird vorzugsweise bei mindestens 0 °C, insbesondere bei mindestens 10 °C, bevorzugt bei mindestens 15 °C und insbesondere bei höchstens 80 °C durchgeführt, wobei vorzugsweise bei höchstens 35 °C, besonders vorzugsweise bei höchstens 25 °C in diesem Arbeitsschritt gearbeitet wird.

Das Bestrahlen der Strahlen härtbaren Zusammensetzung erfolgt vorzugsweise mindestens eine Millisekunde, bevorzugt zwischen einer Millisekunde und einer Sekunde, besonders bevorzugt zwischen 1 Sekunde und 5 Sekunden, wobei maximal vorzugsweise höchstens 500 Sekunden je Schritt bestrahlt wird, d.h. je aufgelöstem Datenpunkt in einer Schicht. Vorzugsweise wird maximal 100 Sekunden je Schritt bestrahlt.

Vorzugsweise wird im Anschluss der Formkörper in Form einer Zahnfleischmaske aus weichbleibendem Dentalmaterial in einem alkoholischen Reinigungsbad, insbesondere einem Isopropanol gefüllten Reinigungsbad, mit Ultraschall bei Temperaturen zwischen 30 °C und 60 °C von der noch flüssigen Zusammensetzung gereinigt. Vorzugsweise wird auf diese Weise die noch flüssige Silikone enthaltende Zusammensetzung von dem Formkörper entfernt.

Vorzugsweise schließt sich im Anschluss an den Reinigungsprozess eine Nachvergütung in einem Licht-Ofen an. Besonders bevorzugt wird mittels eines Licht-Ofens der Formkörper aus weichbleibendem Dentalmaterial, insbesondere die Zahnfleischmaske oder die Unterfütterung, nachvergütet, d.h. weiter ausgehärtet. Dies geschieht vorzugsweise ebenfalls mit Lichtquellen mit Wellenlängen von 300 nm bis 500 nm. Gemäß einer bevorzugten Ausführungsform kann dabei in einem Temperaturbereich von 20 °C bis 90 °C gearbeitet werden, vorzugsweise zwischen 20 bis 60 °C.

Als Alternative zur zweiten Bestrahlung oder zusätzlich kann der Formkörper aus weichbleibendem Dentalmaterial eine Stunde erwärmt werden, bevorzugt weniger als eine Stunde, besonders bevorzugt höchstens 10 Minuten, weiter bevorzugt höchstens eine Minute, um sie weiter auszuhärten, insbesondere um sie zu ihrer endgültigen Geometrie auszuhärten. Die dabei verwendete Temperatur sollte mindestens bei 80 °C liegen, vorzugsweise mindestens bei 100 °C, bevorzugt bei 120 °C, und bevorzugt bei höchstens 250 °C, besonders bevorzugt bei höchstens 160 °C.

In den erfindungsgemäßen Verfahren werden besonders bevorzugt Zusammensetzungen eingesetzt, die flüssige, niedrig- bis hochviskose Monomere und/oder Prepolymere umfassen, die ausgewählt sind aus
a)Silikonen umfassend (i) Alken-funktionalisierte Silikone und hydridische Silikone, insbesondere Alken-funktionalisierte Polymethylsiloxane, hydridische Polymethylsiloxane; wobei das Alken-funktionalisierte Silikon ausgewählt ist aus Vinyl-, Propenyl-, Butenyl-, Pentenyl-, Hexenyl-, Octenyl-, Allyl-, Alkenyloxy-, Alkenylamino-, Allyloxy-, Allyamino-, Furanyl- Phenyl- und Benzyl-funktionalisierten Silikonen, insbesondere sind die Silikone entsprechend funktionalisierte Polymethylsiloxane; oder
   (ii) eine Silikonzusammensetzung erhalten aus der Umsetzung von silanolterminierten Silikonen und Silan-Vernetzungsmitteln, wobei das Silan-Vernetzungsmittel der folgenden Formel I entspricht

      RₐSiX_{b}, (I)

      wobei R ausgewählt ist aus Vinyl-, Propenyl-, Butenyl-, Pentenyl-, Hexenyl-, Octenyl-, Allyl-, Alkenyloxy-, Alkenylamino-, Allyloxy-, Allyamino-, Furanyl- Phenyl- und Benzyl-Gruppen und X einer Alkoxy-, Amino-, Amido, Oximino-, Alkenoxy- und/oder Acetoxy-Gruppe entspricht, mit a gleich 1 oder 2, b ist 2 oder 3 und a+b gleich 4, insbesondere ist X eine Methoxy-, Ethoxy- und/oder Acetoxy-Gruppe, vorzugsweise sind die silanolterminierten Silikone überwiegend lineare Siloxane mit Silanol-Endgruppen, bevorzugt sind die Siloxane Polymethylsiloxane, insbesondere der Formel II

      HO-Si(CH₃)₂-O-(Si(CH₃)₂)ₓ-O-(H₃C)₂Si-OH (II)

      mit x gleich größer 0, vorzugsweise x größer 100; oder
   (iii) Alken-funktionalisierte Silikone, wie vorstehend definiert.
   Die Zusammensetzung können zusätzlich gemischt mit
b) ein- oder mehrfunktionelle Acrylate und/oder Methacrylate optional mit 1 bis 30 C-Atome umfassendem aliphatischen Grundgerüst, Poly(ethylenglykol)- oder Dendrimer basiertem Grundgerüst oder eine Mischung enthaltend mindestens eines der vorgenannten Monomere oder Prepolymere; oder
c)Di-, Tri oder Polyisocyanate, Diisocyanate (TDMI), Hexandiisocyanat (HDI), Diphenylmethan-4,4'-diisocyanat (MDI), TDI, MDI, H12MDI, IPDI, TMXDI, NCOterminierte Urethan-Prepolymere, Polyester basierte Urethan-Prepolymere, und Alkoholen oder mehrwertigen Alkoholen, wie Ethanol, Isopropanol, Glykole, Polyethylenglykole.

Die mittels Strahlen härtbare Silikone enthaltende Zusammensetzung kann eine zwei Komponenten Mischung gemäß a) (i) und (ii) oder eine Ein-Komponenten Mischung, wie a) (iii) sein.

Weiter bevorzugt werden Zusammensetzungen eingesetzt, welche sich dadurch auszeichnen, dass a) (i) die Alken-funktionalisierten Silikone mindestens zwei Alken-Gruppen pro Molekül enthalten und bei 25 °C eine Viskosität von 0,2 bis 45000 Pa•s aufweisen, und die hydridischen Silikone mindestens zwei Si-H-Funktionalitäten aufweisen, bevorzugt ist das Alken-Silikon ein Polymethylsiloxan mit mindestens zwei Alken-Gruppen und das hydridische Silikon ein Polymethylsiloxan mit mindestens zwei Si-H-Funktionalitäten; (ii) die silanolterminierten Silikone umfassen silanolterminierte Polymethylsiloxane mit einem massengemittelten Molekulargewicht von 5000 bis 300000, ermittelt durch Gelpermeationschromatographie und das Silan-Vernetzungmittel Vinyltrimethoxysilan, Vinyltriamosilan, Vinyltriamidosilan, Vinyltrioximinosilan, Vinyltriisopropenoxysilan oder Vinyltriacetoxysilan ist. Die Gelpermeationschromatigraphie ist dem Fachmann zur Ermittlung des Molekulargewichtes gut bekannt, bspw. kann der Fachmann die massengemittelten Molekulargewichte mittels der in der DIN 55672-1:2007-08 beschriebenen Methode bestimmen.

Dabei ist es weiter besonders bevorzugt, wenn die Zusammensetzung, vorzugsweise die a) Silikone eine Viskosität [D = 0,5/25 °C] von mindestens 500 mPa•s aufweisen, vorzugsweise 10000 mPa•s, insbesondere mindestens 20000 mPa•s, weiter besonders bevorzugt im Bereich von 10000 bis 2000000 mPa•s, vorzugsweise höchstens 100000 mPa•s.

Gemäß einer weiteren Alternative ist es besonders bevorzugt, wenn die Viskosität der Komponente a) die Alken-funktionalisierten und die hydridischen Silikone mit mindestens zwei Si-H-Funktionalitäten in der Mischung bei 23 °C eine Dichte von 0,97 g/cm³ aufweisen und eine Viskosität im Bereich von 500 bis 2500 mPa•s, vorzugsweise von 750 bis 1500 mPa•s, besonders bevorzugt von 900 bis 1100 mPa•s aufweisen.

Besonders bevorzugt werden Zusammensetzungen in dem erfindungsgemäßen Verfahren eingesetzt, die umfassen
a)
   (i) mit mindestens zwei Alken-Gruppen funktionalisierte Silikone und hydridische Silikone mit mindestens zwei Si-H-Funktionalitäten sowie einen durch Strahlen aktivierbaren Katalysator der Platin-Gruppe, insbesondere durch Strahlen der Wellenlänge von 200 bis 500 nm aktivierbaren Katalysator (UV-A und/oder UV-B), insbesondere einen Hydrosilylierungskatalysator, wobei insbesondere das Gewichtsverhältnis von Alken-Gruppen funktionalisierten Silikonen zu hydridischen Silikonen zwischen 20:1 bis 1:5 liegt, vorzugsweise zwischen 15:1 bis 1:1, besonders bevorzugt zwischen 11:1 bis 1:2, und vorzugsweise zusätzlich bis zu 0,1 Gew.-% in Bezug auf die Gesamtzusammensetzung Hydrosilylierungskatalysator sowie optional 0 bis 10 Gew.-% Füllstoff in Bezug auf die Gesamtzusammensetzung, optional 0 bis 10 Gew.-% Verdünner in Bezug auf die Gesamtzusammensetzung und ad 100 Gew.-% Alken-Gruppen funktionalisierte Silikone und hydridische Silikone vorliegen;
      oder
   (ii) silanolterminierte Polysiloxane und Silan-Vernetzungmittel ausgewählt aus Vinyltrimethoxysilan, Vinyltriamosilan, Vinyltriamidosilan, Vinyltrioximinosilan, Vinyltriisopropenoxysilan oder Vinyltriacetoxysilan und einen Photoinitiator, insbesondere einen Photoinitiator ausgewählt aus der Gruppe Benzoin, Benzophenon, Michlers Keton, Dialkoxyacetophenon, Acetophenon, Benzil sowie deren Derivate oder Mischungen enthaltend diese, wobei jeweils unabhängig die Zusammensetzung optional Füllstoffe oder Verdünnungsmittel, Pigmente umfasst.

Typische Verdünner sind hierbei nicht-funktionalisierte Polysiloxane, wie Polyalkylsiloxane, Polymethylsiloxane, z.B. aus der Baysilon-Reihe der Fa. Momentive Performance Materials.

Als Füllstoffe eignen sich Quarz, Diatomerde, Calciumsilikat, Zirkonsilikat, Zeolithe, Metalloxidpulver, Metalloxidhydroxidpulver, wie Aluminium-, Titan-, Eisen-, oder Zinkoxid bzw. deren Mischoxide, Magnesiumsulfat, Bariumsulfat, Caciumcarbonat, Gips, Siliciumnitrid, Siliciumcarbid, Bornitrid, Glas- oder Kunststoffpulver, Kunststoffkügelchen und Kunstoffmikrospheren.

Als verstärkende Füllstoffe können Füllstoffe mit einer BET-Oberfläche von mindestens 50 m²/g eingesetzt werden, wie pyrogene Kieselsäure, gefällte Kieselsäure, und Silicium-Aluminium-Mischoxide großer BET-Oberflächen. Ebenfalls können faserförmige Füllstoffe wie Kunststoff-Fasern oder Fasern aus Biopolymeren zugesetzt werden. Diese Füllstoffe können grundsätzlich oberflächenmodifiziert sein, um sie zu hydrophobieren oder auch um sie zu funktionalisieren, damit sie beim Härtungsprozess kovalent in die Polymermatrix eingebunden werden. Daher können auch Vinyl-, Acrylat- oder Glycidyloxyalkyl- modifizierte Füllstoffe in der Zusammensetzung eingesetzt werden. Grundsätzlich können die Füllstoffe alleine oder in einer Mischung von mindestens zwei Füllstoffen eingesetzt werden.

Gemäß einer besonders bevorzugten Ausführungsform umfasst das erfindungsgemäße Verfahren auch (i) optional in einem Schritt vor dem Rapid-Prototyping ein reales Modell zumindest eines Teils des Gebisses und des umgebenden Zahnfleisches eines Menschen erstellt wird, oder
(ii) in einem Schritt vor der Erstellung eines virtuellen Modells ein erster digitaler Datensatz des virtuellen Modells mittels Intraoralscan ermittelt wird oder über einen 3D-Scan eines Silikonabdrucks erfolgt oder über einen 3D-Scan eines realen Modells, insbesondere eines Gipsmodels, und
(iii) in einem nächsten Schritt vor dem Rapid-Prototyping wird der digitale Datensatz mit der Geometrie des virtuellen Modells des zu erstellenden Formkörpers erstellt.

Erfindungsgemäß umfasst das Verfahren ferner die nachfolgenden Schritte:
- das Rapid-Prototyping erfolgt mit einer Strahlen härtbaren Zusammensetzung von Monomeren und/oder Prepolymeren, wobei optional in der zu härtenden Zusammensetzung eine Stützstruktur für den zu erstellenden Formkörper vorgesehen ist, der abgeleitet ist aus dem virtuellen oder realen Modell eines Teils des Zahnfleisches sowie optional zumindest eines Teils des Gebisses und die Stützstruktur optional Kontaktpunkte oder Kontaktflächen in der Ebene der gingivalen Zahnfleischkontur und/oder benachbart zur Ebene der labialen Oberfläche des Formkörpers in Form der der Zahnfleischmaske aufweist.

Gleichfalls Gegenstand der Erfindung ist die Verwendung von Strahlen härtbaren Zusammensetzungen umfassend Monomere und/oder Prepolymere zur Herstellung von Formkörpern aus weichbleibendem Dentalmaterial, insbesondere weichbleibenden dentalen Formkörpern, wie Zahnfleischmasken, bevorzugt von Zusammensetzungen die mittels Rapid-Prototyping, wie z.B. Stereolithographie oder DPL-Verfahren 3D-Druckverfahren gehärtet werden.

Die Aktivierung erfolgt durch Einstrahlen mit 200 mW/cm² bei 25 °C (2 mm). Üblicherweise erfolgt die Aushärtung bei einer Aktivierung von 1 Sekunde innerhalb von 5 Minuten, bei einer Aktivierung von 5 Sekunden reichen 2 Minuten zur Aushärtung, während bei einer Belichtung über 20 Sekunden, insbesondere je Laser Lichtpunkt, die Aushärtung bereits nach 20 Sekunden erfolgt ist. In den Ausführungsbeispielen sind für die erfindungsgemäßen Elastomere kürzere Aushärtzeiten ausreichend. Besonders bevorzugt kann die Aushärtung jedoch bei den erfindungsgemäß verwendeten Elastomeren in deutlich kürzerer Zeit erfolgen.

Die Voraussetzungen für die Anfertigung einer Zahnfleischmaske sind stabile Zahnfleischverhältnisse, d.h. eine vorhandene Grunderkrankung muss behandelt sein und der Patient sollte eine sehr gute Mundhygiene betreiben. Das Tragen einer Zahnfleischmaske über Nacht wird nicht empfohlen. Nachts sollte die Zahnfleischmaske nicht getragen werden.

Die erfindungsgemäßen Zahnfleischmasken (Figur 3, 5 (ohne) und 4, 6 (mit)) bieten einen guten Tragekomfort durch ihre Benetzbarkeit. Die Silikone nehmen Feuchtigkeit auf und geben sie in trockener Umgebung wieder ab, deshalb ist für den Erhalt der Zahnfleischmaske eine feuchte Lagerung unumgänglich. Bei sachgemäßer Handhabung ist eine Zahnfleischmaske etwa 1 Jahr verwendbar. Ihre Reproduzierbarkeit ist jedoch sehr einfach auf den vorhandenen Modellen oder anhand der vorhandenen digitalen Datensätze möglich, sofern sich der Zustand des Gebisses nicht verändert hat.

Gleichfalls wird ein Kit zur Herstellung eines Formkörpers aus weichbleibendem Dentalmaterial umfassend eine Strahlen härtbare Zusammensetzung von Monomeren und/oder Prepolymeren sowie einen Strahlen aktivierbaren Katalysator offenbart.

In Figur 8 ist als Skizze exemplarisch eine Zahnfleischmaske 0 auf einem Gipsmodell für den Unterkiefer dargestellt. Figur 9 zeigt eine Rapid-Prototyping Maschine 1 und ein Bad mit der Strahlen härtbaren Zusammensetzung 5, in der die vertikal bewegliche Bauplattform 2 auf einem vertikal verfahrbaren Träger 4 dargestellt ist. Auf der Bauplattform ist als Skizze eine Stützstruktur 3 für den flexiblen Formkörper 0 (nicht dargestellt) abgebildet.

Nachfolgend werden Ausführungsbeispiele dargestellt, die die Erfindung näher erläutert ohne sie auf dieses Ausführungsbeispiel zu beschränken.

Semicosil 912 UV A/B: Silikonkautschuk, RTV-2 additionshärtendes ZweiKomponenten Silikongummi, Topfzeit bei 23 °C > 3 Tage und Mischungsverhältnis von 10:1., Viskosität 1000 mPa•s.

Die Aktivierung erfolgt durch Einstrahlen mit 200 mW/cm² bei 25 °C (2 mm). Besonders bevorzugt kann die Aushärtung jedoch bei den erfindungsgemäß verwendeten Elastomeren in deutlich kürzerer Zeit erfolgen. So kann bei einer Aktivierung von 0,5 Sekunden die Aushärtung innerhalb von 2,5 Minuten erfolgt sein, bei einer Aktivierung von 2,5 Sekunden reicht 1 Minute zur Aushärtung, während bei einer Belichtung über 10 Sekunden, insbesondere je Laser Lichtpunkt, die Aushärtung bereits nach 10 Sekunden erfolgt ist.
Beispiel 1: Eine Mischung aus 10 Teilen Semicosil 912 UVA additionsvernetzendes Silikon (Fa. Wacker) und 1 Teil Semicosil 912 UVB (Platin-Katalysator) wird mittels Rapid-Prototyping zu einer Zahnfleischmaske mit Strahlen gehärtet.
Beispiel 2: Eine Mischung aus 10 Teilen Semicosil 945 UVA (Fa. Wacker) und 1 Teil Semicosil 945 UVB wird mittels Rapid-Protoyping zu einer Zahnfleischmaske mit Strahlen gehärtet.
Beispiel 3: Eine Mischung aus 10 Teilen Semicosil 945 UVA (Fa. Wacker) und 1 Teil Semicosil 945 UVB sowie 0,1 Teilen pyrogener Kieselsäure wird mittels Rapid-Protoyping zu einer Zahnfleischmaske gehärtet.
Beispiel 4: Eine Mischung aus 10 Teilen Semicosil 945 UVA (Fa. Wacker) und 1 Teil Semicosil 945 UVB sowie 0,1 Teilen pyrogener oberflächenmodifizierter Kieselsäure wird mittels Rapid-Protoyping zu einer Zahnfleischmaske gehärtet.

Für das Rapid-Prototyping wurde vom Hersteller: 3D Systems das Model: Viper Si2, Maschinentyp: SLA verwendet.

Die Figuren 3 und 4 zeigen starken Zahnfleischschwund (Figur 3; D) infolge fortgeschrittener Parodontitis einer Patientin. Durch entsprechende Behandlung konnte die Parodontose zwar gestoppt werden, ein Aufbau des verloren gegangenen Gewebes war allerdings nicht mehr möglich. Diese Patientin litt unter der kosmetischen Beeinträchtigung und beklagt außerdem eine gestörte Aussprache durch den Luftdurchtritt zwischen den Schneidezähnen. Mit einer herausnehmbaren erfindungsgemäßen Zahnfleischmaske (Figur 4, C oder Figur 7), insbesondere nach einem der Beispiele 1 oder 2, konnten wir das Problem zur Zufriedenheit der Patientin lösen.

## Patentansprüche

1. Formkörper aus weichbleibendem Dentalmaterial aus einer Lichtstrahlen gehärteten und optional thermisch nachbehandelten Zusammensetzung, umfassend Lichtstrahlen gehärtete Polymere sowie optional thermisch oder in Gegenwart von Feuchtigkeit nachbehandelte Polymere, wobei das weichbleibende Dentalmaterial Silikone umfasst und der Formkörper eine Zahnfleischmaske ist, deren gingivale Oberfläche der Oberflächenkontur des Zahnfleisches und/oder der freiliegenden Zahnhälse angepasst ist und die mit der gingivalen Oberfläche auf dem Zahnfleisch und/oder den freiliegenden Zahnhälsen haftfähig ist, wobei die labiale Oberfläche der Zahnfleischmaske die Textur und/oder Kontur von Zahnfleisch nachbildet.

2. Formkörper nach Anspruch 1, **dadurch gekennzeichnet, dass** er aus einem Elastomer ist.

3. Formkörper nach Anspruch 1 oder 2, **dadurch gekennzeichnet, dass** er aus einer Zusammensetzung enthaltend eine Mischung auswählt aus ein Silikon und mindestens, Urethan oder (Meth)acrylat ist.

4. Formkörper nach einem der Ansprüche 1 bis 3, **dadurch gekennzeichnet, dass** die Zusammensetzung nicht-modifizierte oder Oberflächen modifizierte Füllstoffe, Verdünner und/oder Pigmente enthält.

5. Formkörper nach einem der Ansprüche 1 bis 4, **dadurch gekennzeichnet, dass** er eine an die Zahnfleischoberflächenkontur anliegende Schicht ist, insbesondere mit einer Schichtdicke von 0,01 bis 0,75 cm, wobei die Schichtdicke im marginalen Bereich, insbesondere in den Zahnzwischenräumen und/oder Zahnhals-Zwischenräumen größer ist als im restlichen Bereich und/oder die Zahnfleischmaske auf der labialen Oberfläche einer Zahnfleischtextur nachempfunden ist.

6. Verfahren zur Herstellung eines Formkörpers aus weichbleibendem Dentalmaterial nach einem der Ansprüche 1 bis 5, **dadurch gekennzeichnet, dass** der Formkörper aus weichbleibendem Dentalmaterial aus einem digitalen Datensatz mit der Geometrie des virtuellen Modells des zu erstellenden Formkörpers mittels Licht härtender Verfahren aus einer Strahlen härtbaren Zusammensetzung von Monomeren und/oder Prepolymeren hergestellt wird, wobei die Zusammensetzung Lichtstrahlen härtbare Silikone umfasst.

7. Verfahren nach Anspruch 6, **dadurch gekennzeichnet, dass** die Zusammensetzung flüssige, niedrig- bis hochviskose Monomere und/oder Prepolymere umfasst, die ausgewählt sind aus
Silikonen umfassend
(i) Alken-funktionalisierte Silikone und hydridische Silikone, insbesondere Alken-funktionalisierte Polymethylsiloxane und hydridische Polymethylsiloxane; wobei das Alken-funktionalisierte Silikon ausgewählt ist aus Vinyl-, Propenyl-, Butenyl-, Pentenyl-, Hexenyl-, Octenyl-, Allyl-, Alkenyloxy-, Alkenylamino-, Allyloxy-, Allyamino-, Furanyl- Phenyl- und Benzyl-funktionalisierten Silikonen, insbesondere sind die Silikone Polymethylsiloxane;
(ii) eine Silikonzusammensetzung erhalten aus der Umsetzung von silanolterminierten Silikonen und Silan-Vernetzungmittel, wobei das Silan-Vernetzungsmittel der folgenden Formel I entspricht
RₐSiX_{b}, (I)
wobei R ausgewählt ist aus Vinyl-, Propenyl-, Butenyl-, Pentenyl-, Hexenyl-, Octenyl-, Allyl-, Alkenyloxy-, Alkenylamino-, Allyloxy-, Allyamino-, Furanyl-Phenyl- und Benzyl-Gruppen und X einer Alkoxy-, Amino-, Amido, Oximino-, Alkenoxy- und/oder Acetoxy-Gruppe entspricht, mit a gleich 1 oder 2, b ist 2 oder 3 und a+b gleich 4, X ist eine Methoxy-, Ethoxy- und/oder Acetoxy-Gruppe, vorzugsweise sind die silanolterminierten Silikone überwiegend lineare Siloxane mit Silanol-Endgruppen, bevorzugt sind die Siloxane Polymethylsiloxane, insbesondere der Formel II
HO-Si(CH₃)₂-O-(Si(CH₃)₂)ₓ-O-(H₃C)₂Si-OH (II)
mit x gleich größer 0, vorzugsweise x größer 100.

8. Verfahren nach Anspruch 7, **dadurch gekennzeichnet, dass**
a)
(i) die Alken-funktionalisierten Silikone mindestens zwei Alken-Gruppen pro Molekül enthalten und bei 25 °C eine Viskosität von 0,2 bis 45000 Pa•s aufweisen, und die hydridischen Silikone mindestens zwei Si-H-Funktionalitäten aufweisen, bevorzugt ist das Alken-Silikon ein Polymethylsiloxan mit mindestens zwei Alken-Gruppen und das hydridische Silikon ein Polymethylsiloxan mit mindestens zwei Si-H-Funktionalitäten;
(ii) die silanolterminierten Silikone umfassen silanolterminierte Polymethyl siloxane mit einem massengemittelten Molekulargewicht von 5000 bis 300000, ermittelt durch Gelpermeationschromatographie und das Silan-Vernetzungmittel Vinyltrimethoxysilan, Vinyltriamosilan, Vinyltriamidosilan, Vinyltrioximinosilan, Vinyltriisopropenoxysilan oder Vinyltriacetoxysilan ist.

9. Verfahren nach einem der Ansprüche 6 bis 8, **dadurch gekennzeichnet, dass** die Zusammensetzung umfasst
a)
(i) mit mindestens zwei Alken-Gruppen funktionalisierte Silikone und hydridische Silikone mit mindestens zwei Si-H-Funktionalitäten sowie einen durch Strahlen aktivierbaren Katalysator der Platin-Gruppe, insbesondere durch Strahlen der Wellenlänge von 200 bis 500 nm aktivierbaren Katalysator (UV-A und/oder UV-B), oder
(ii) silanolterminierte Polysiloxane und Silan-Vernetzungmittel ausgewählt aus Vinyltrimethoxysilan, Vinyltriamosilan, Vinyltriamidosilan, Vinyltrioximinosilan, Vinyltriisopropenoxysilan oder Vinyltriacetoxysilan und einen Photoinitiator, insbesondere einen Photoinitiator ausgewählt aus der Gruppe Benzoin, Benzophenon, Michlers Keton, Dialkoxyacetophenon, Acetophenon, Benzil sowie deren Derivate oder Mischungen enthaltend diese, wobei jeweils unabhängig die Zusammensetzung optional Füllstoffe oder Verdünnungsmittel, Pigmente umfasst.

10. Verfahren nach einem der Ansprüche 6 bis 9, **dadurch gekennzeichnet, dass**
(i) optional in einem Schritt vor dem Rapid-Prototyping ein reales Modell zumindest eines Teils des Gebisses und des umgebenden Zahnfleisches eines Menschens erstellt wird, oder
(ii) in einem Schritt vor der Erstellung eines virtuellen Modells ein erster digitaler Datensatz des virtuellen Modells mittels Intraoralscan ermittelt wird oder über einen 3D-Scan eines Silikonabdrucks erfolgt oder über einen 3D-Scan eines realen Modells, insbesondere eines Gipsmodels, und
(iii) in einem nächsten Schritt vor dem Rapid-Prototyping wird der digitale Datensatz mit der Geometrie des virtuellen Modells des zu erstellenden Formkörpers erstellt.

11. Verfahren nach einem der Ansprüche 6 bis 10, **dadurch gekennzeichnet, dass** das Licht härtende Verfahren, insbesondere ein Rapid-Prototyping Verfahren, bevorzugt ein Licht härtendes generatives Verfahren, mit einer Strahlen härtbaren Zusammensetzung von Monomeren und/oder Prepolymeren erfolgt, wobei optional in der zu härtenden Zusammensetzung eine Stützstruktur für den zu erstellenden Formkörper vorgesehen ist, der abgeleitet ist aus dem virtuellen oder realen Modell eines Teils des Zahnfleisches sowie optional zumindest eines Teils des Gebisses und die Stützstruktur optional Kontaktpunkte oder Kontaktflächen in der Ebene der gingivalen Zahnfleischkontur und/oder benachbart zur Ebene der labialen Oberfläche des Formkörpers aufweist, insbesondere der Zahnfleischmaske aufweist.

12. Verfahren nach einem der Ansprüche 6 bis 11, **dadurch gekennzeichnet, dass** der Formkörper aus weichbleibendem Dentalmaterial aus einem digitalen Datensatz mit der Geometrie des virtuellen Modells des zu erstellenden Formkörpers mittels Rapid-Prototyping, insbesondere mittels Licht härtender generativer Verfahren schichtweise aus einer Strahlen härtbaren Zusammensetzung von Monomeren und/oder Prepolymeren hergestellt wird.

13. Verfahren nach einem der Ansprüche 6 bis 12, **dadurch gekennzeichnet, dass** das Licht härtende Verfahren, ein Rapid-Prototyping Verfahren, generatives Verfahren, bevorzugt ein Stereolithographie, ein DLP-Verfahren oder 3D-Druckverfahren ist.

14. Verwendung von mit Lichtstrahlen härtbaren Zusammensetzungen umfassend Silikone zur Herstellung von Zahnfleischmasken aus weichbleibendem Dentalmaterial, insbesondere von Zusammensetzungen die mittels Rapid-Prototyping gehärtet werden.

## Claims

1. Moulded body made of a permanently soft dental material from a light ray cured and optionally thermally post-treated composition, comprising light ray cured polymers as well as, optionally, thermally or in the presence of moisture post-treated polymers, wherein the permanently soft dental material comprises silicones, and the moulded body is a gingival mask, the gingival surface of which is adjusted to the surface contour of the gingiva and/or of the exposed tooth necks, and which is adhesive on the gingiva and/or the exposed tooth necks with the gingival surface, wherein the labial surface of the gingival mask imitates the texture and/or contour of gingiva.

2. Moulded body according to claim 1, **characterised in** being made of an elastomer.

3. Moulded body according to claim 1 or 2, **characterised in** being made of a composition containing a mixture selected from a silicone and at least urethane or (meth)acrylate.

4. Moulded body according to any one of the claims 1 to 3, **characterised in that** the composition contains non-modified or surface modified fillers, diluents and/or pigments.

5. Moulded body according to any one of the claims 1 to 4, **characterised in** being a layer adjusted to the gingival surface contour, in particular having a layer thickness of 0.01 to 0.75 cm, wherein the layer thickness in the marginal region, in particular in the interdental spaces and/or tooth neck interspaces, is greater than in the remaining region, and/or the gingival mask on the labial surface is modeled on a gingival texture.

6. Method for the production of a moulded body made of permanently soft dental material according to any one of the clams 1 to 5, **characterised in that** the moulded body made of permanently soft dental material is produced from a ray curable composition of monomers and/or prepolymers by means of light curing processes from a digital data set having the geometry of the virtual model of the moulded body to be created, wherein the composition comprises light ray curable silicones.

7. Method according to claim 6, **characterised in that** the composition comprises liquid, low to high viscosity monomers and/or prepolymers being selected from silicones comprising
(i) alkene-functionalised silicones and hydridic silicones, in particular alkene-functionalised polymethylsiloxane and hydridic polymethylsiloxane; wherein the alkene-functionalised silicone is selected from vinyl-, propenyl-, butenyl-, pentenyl-, hexenyl-, octenyl-, allyl-, alkenyloxy-, alkenylamino-, allyloxy-, allyamino-, furanyl-, phenyl- and benzyl-functionalised silicones, in particular the silicones are polymethylsiloxanes;
(ii) a silicone composition obtained from the reaction of silanol-terminated silicones and silane cross-linking agents, wherein the silane cross-linking agent corresponds to the following formula I
RₐSiX_{b}, (I)
wherein R is selected from vinyl-, propenyl-, butenyl-, pentenyl-, hexenyl-, octenyl-, allyl-, alkenyloxy-, alkenylamino-, allyloxy-, allyamino-, furanyl-, phenyl- and benzyl-groups, and X corresponds to an alkoxy-, amino-, amido, oximino-, alkenoxy- and/or acetoxy-group, with a equal to 1 or 2, b is 2 or 3 and a+b equal to 4, X is a methoxy-, ethoxy- and/or acetoxy-group, preferably the silanol-terminated silicones are mainly linear siloxanes having silanol end groups, preferably the siloxanes are polymethylsiloxanes, in particular of formula II
HO-Si(CH₃)₂-O-(Si(CH₃)₂)ₓ-O-(H₃C)₂Si-OH (II)
with x equal to greater than 0, preferably x greater than 100.

8. Method according to claim 7, **characterised in that**
a)
(i) the alkene-functionalised silicones contain at least two alkene-groups per molecule and have a viscosity of 0.2 to 45000 Pa·s at 25 °C, and the hydridic silicones have at least two Si-H-functionalities, preferably the alkene silicone is a polymethylsiloxane having at least two alkene-groups and the hydridic silicone is a polymethylsiloxane having at least two Si-H-functionalities;
(ii) the silanol-terminated silicones comprise silanol-terminated polymethylsiloxanes having a mass-averaged molecular weight of 5000 to 300000, determined by gel permeation chromatography, and the silane cross-linking agent is vinyltrimethoxysilane, vinyltriaminosilane, vinyltriamidosilane, vinyltrioximinosilane, vinyltriisopropenoxysilane or vinyltriacetoxysilane.

9. Method according to any one of the claims 6 to 8, **characterised in that** the composition comprises
a)
(i) silicones functionalised with at least two alkene-groups and hydridic silicones with at least two Si-H-functionalities as well as a catalyser of the platinum group being activatable by rays, in particular catalyser being activatable by rays of the wave length of 200 to 500 nm (UV-A and/or UV-B), or
(ii) silanol-terminated polymethylsiloxanes and silane cross-linking agents selected from vinyltrimethoxysilane, vinyltriaminosilane, vinyltriamidosilane, vinyltrioximinosilane, vinyltriisopropenoxysilane or vinyltriacetoxysilane and a photoinitiator, in particular a photoinitiator selected from the group of benzoin, benzophenone, Michler's ketone, dialkoxyacetophenone, acetophenone, benzil as well as their derivatives or mixtures containing them, wherein, each independently, the composition optionally comprises fillers or diluents, pigments.

10. Method according to any one of the claims 6 to 9, **characterised in that**
(i) optionally, in a step prior to rapid prototyping, a real model of at least a part of the dentition and the surrounding gingiva of a human is created, or
(ii) in a step prior to creating a virtual model, a first digital data set of the virtual model is determined by means of intraoral scan, or is made via a 3D scan of a silicone impression, or via a 3D scan of a real model, in particular a plaster model, and
(iii) in a next step prior to rapid prototyping, the digital data set having the geometry of the virtual model of the moulded body to be created is created.

11. Method according to any one of the claims 6 to 10, **characterised in that** the light curing process, in particular a rapid prototyping process, preferably a light curing generative process, is made with a ray curable composition of monomers and/or prepolymers, wherein a supporting structure for the moulded body to be created is optionally provided in the composition to be cured, which is derived from the virtual or real model of a part of the gingiva as well as, optionally, of at least a part of the dentition, and the supporting structure optionally has contact points or contact areas in the plane of the gingival gingiva contour and/or adjacent to the plane of the labial surface of the moulded body.

12. Method according to any one of the claims 6 to 11, **characterised in that** the moulded body made of permanently soft dental material is produced layer by layer from a ray curable composition of monomers and/or prepolymers by means of rapid prototyping, in particular by means of light curing generative processes, from a digital data set having the geometry of the virtual model of the moulded body to be created.

13. Method according to any one of the claims 6 to 12, **characterised in that** the light curing process is a rapid prototyping process, generative process, preferably a stereolithography process, DLP process, or 3D printing process.

14. Use of light ray curable compositions comprising silicones for the production of gingival masks made of permanently soft dental material, in particular of compositions being cured by means of rapid prototyping.

## Revendications

1. Corps moulé fait d'un matériau dentaire doux en permanence à partir d'une composition durcie aux rayons de lumière et facultativement post-traitée thermiquement, comprenant des polymères durcis aux rayons de lumière ainsi que, facultativement, des polymères post-traités thermiquement ou en présence d'humidité, selon lequel le matériau dentair doux en permanence comprend des silicones, et le corps moulé est un masque gingival, la surface gingivale de lequel est ajustée à la contour de surface de la gencive et/ou des collets exposés, et quel est adhésif sur la gencive et/ou les collets exposés avec la surface gingivale, selon lequel la surface labiale du masque gingival imite la texture et/ou le contour de gencive.

2. Corps moulé selon la revendication 1, caractérisé en étant fait d'un élastomère.

3. Corps moulé selon la revendication 1 ou 2, caractérisé en étant fait d'une composition contenant un mélange sélectionné à partir d'une silicone et au moins un uréthane ou un (méth)acrylate.

4. Corps moulé selon l'une des revendications 1 à 3, **caractérisé en ce que** la composition contient des charges non modifiées ou modifiées en surface, des diluants et/ou des pigments.

5. Corps moulé selon l'une des revendications 1 à 4, caractérisé en étant une couche ajustée au contour de la surface gingivale, en particulière ayant une épaisseur de couche de 0,01 à 0,75 cm, selon lequel l'épaisseur de couche dans la région marginale, en particulière dans les interstices dentaires et/ou les interstices des collets, est plus grande que dans la région restante, et/ou le masque gingival sur la surface labiale est modelée sur une texture gingivale.

6. Procédé pour la production d'un corps moulé fait d'un matériau dentaire doux en permanence selon l'une des revendications 1 à 5, **caractérisé en ce que** le corps moulé fait d'un matériau dentaire doux en permanence est produit à partir d'une composition durcissable aux rayons des monomères et/ou prépolymères au moyen des méthodes durcissant à la lumière à partir d'un ensemble de données numérique ayant la géométrie du modèle virtuel du corps moulé à être créé, selon lequel la composition comprend des silicones durcissable aux rayons de lumière.

7. Procédé selon la revendication 6, **caractérisé en ce que** la composition comprend des monomères et/ou prèpolymères liquides, de la viscosité faible à haute, étant sélectionnés à partir des silicones comprenant
(i) des silicones et des silicones hydrurées à fonctionnalité alcène, en particulière polyméthylsiloxane et polyméthylsiloxane hydrurés à fonctionnalité alcène; selon lequel la silicone à fonctionnalité alcène est sélectionné à partir des silicones à fonctionnalité vinyle, propényle, butényle, pentényle, hexényle, octényle, allyle, alcényloxy, alcénylamino, allyloxy, allyamino, furanyle, phényle et benzyle, en particulière les silicones sont polyméthylsiloxanes;
(ii) une composition de silicone obtenue à partir de la reaction des silicones à terminaison silanol et des agents de réticulation au silane, selon lequel l'agent de réticulation au silane correspond à la formule I suivante
RₐSiX_{b}, (I)
selon lequel R est sélectionné à partir des groupes vinyle, propényle, butényle, pentényle, hexényle, octényle, allyle, alcényloxy, alcénylamino, allyloxy, allyamino, furanyle, phényle et benzyle, et X correspond à un groupe alkoxy, amino, amido, oximino, alcénoxy et/ou acétoxy, avec a égal à 1 ou 2, b est 2 ou 3 et a+b égal à 4, X est un groupe méthoxy, éthoxy et/ou acétoxy, de préférence les silicones à terminaison silanol en majorité sont siloxanes linéaires ayant des groupes de fin au silanol, de préférence les siloxanes en majorité sont polyméthylsiloxanes, en particulière de la formule II
HO-Si(CH₃)₂-O-(Si(CH₃)₂)ₓ-O-(H₃C)₂Si-OH (II)
avec x égal ou supérieur à 0, de préférence x supérieur à 100.

8. Procédé selon la revendication 7, **caractérisé en ce que**
a)
(i) les silicones à fonctionnalité alcène contiennent au moins deux groupes alcène par une molécule et ont une viscosité de 0,2 à 45000 Pa·s à 25 °C, et les silicones hydrurées ont au moins deux fonctionnalités à Si-H, de préférence la silicone alcène est un polyméthylsiloxane ayant au moins deux groupes alcène et la silicone hydrurée est un polyméthylsiloxane ayant au moins deux fonctionnalités à Si-H;
(ii) les silicones à terminaison silanol comprennent des polyméthylsiloxanes ayant une masse moléculaire moyen en masse de 5000 à 30000, déterminée par la chromatographie d'exclusion stérique, et l'agent de réticulation au silane est un vinyltriméthoxysilane, vinyltriaminosilane, vinyltriamidosilane, vinyltrioximinosilane, vinyltriisopropénoxysilane or vinyltriacétoxysilane.

9. Procédé selon l'une des revendications 6 à 8, **caractérisé en ce que** la composition comprend
a)
(i) des silicones fonctionnalisées avec au moins deux groupes alcène et des silicones hydrurées avec au moins deux fonctionnalités à Si-H ainsi qu'un catalyseur du groupe du platine étant activable par des rayons, en particulière un catalyseur étant activable par des rayons de la longueur d'onde de 200 à 500 nm (UV-A et/ou UV-B), ou
(ii) polyméthylsiloxanes à terminaison silanol et des agents de réticulation au silane sélectionnés à partir de vinyltriméthoxysilane, vinyltriaminosilane, vinyltriamidosilane, vinyltrioximinosilane, vinyltriisopropénoxysilane or vinyltriacétoxysilane, et un photo-initiateur, en particulière un photo-initiateur sélectionné à partir du groupe de benjoin, benzophénone, cétone de Michler, dialkoxyacétophénone, acétophénone, benzile ainsi que leur dérivés ou un mélange contient lesquelles, selon lequel, chacun indépendamment, la compositions facultativement comprend des charges ou des diluants, des pigments.

10. Procédé selon l'une des revendications 6 à 9, **caractérisé en ce que**
(i) facultativement, dans une étape avant le prototypage rapide, un modèle réel d'au moins une part de la dentition et la gencive environnante d'un humain est créé, ou
(ii) dans une étape avant créant le modèle virtuel, un premier ensemble de données numérique du modèle virtuel est déterminé au moyen d'un scan intraorale, ou est fait via un scan en 3D d'une impression de silicone, ou via un scan en 3D d'un modèle réel, en particulière d'un modèle en plâtre, et
(iii) dans une étape prochaine avant le prototypage rapide, l'ensemble de données numérique ayant la géométrie du modèle virtuel du corps moulé à être créé est créé.

11. Procédé selon l'une des revendications 6 à 10, **caractérisé en ce que** la méthode durcissant à la lumière, en particulière une méthode à prototypage rapide, de préférence une méthode générative durcissant à la lumière, est faite avec une composition durcissable aux rayons des monomères et/ou prépolymères, selon lequel une structure de soutien pour le corps moulé à être créé est facultativement prévue dans la composition à être durcie, quel est dérivé à partir du modèle virtuel ou réel d'une part de la gencive ainsi que, facultativement, au moins d'une part de la dentition, et la structure de soutien facultativement a des point de contact ou des zones de contact dans le plan de la contour gingivale de gencive et/ou adjacent au plan de la surface labiale du corps moulé.

12. Procédé selon l'une des revendications 6 à 11, **caractérisé en ce que** le corps moulé fait d'un matériau dentair doux en permanence est produit couche par couche à partir d'une composition durcissable aux rayons des monomères et/ou prépolymères au moyen du prototypage rapide, en particulière au moyen des méthodes génératives durcissant à la lumière, à partir d'un ensemble de données numérique ayant la géométrie du modèle virtuel du corps moulé à être créé.

13. Procédé selon l'une des revendications 6 à 12, **caractérisé en ce que** la méthode durcissant à la lumière est une méthode à prototypage rapide, méthode générative, de préférence une méthode à stéréolithographie, méthode à DLP, ou méthode d'impression en 3D.

14. Utilisation des compositions durcissables aux rayons de lumière comprenant des silicones pour la production des masques gingivals faits d'un matériau dentaire doux en permanence, en particulière des compositions étant durcies au moyen du prototypage rapide.
